# EUROPÄISCHE PATENTSCHRIFT

(11) **EP 0 987 460 B1**
(45) Veröffentlichungstag und Bekanntmachung des Hinweises auf die Patenterteilung: **22.10.2003**
(21) Anmeldenummer: 98117417.0
(22) Anmeldetag: 15.09.1998
(51) Int. Cl.: F16D 65/12

(54) **Bremseinheit aus Bremsscheibe und Bremsbelag**
Friction element consisting of brake disc and lining
Elément de friction consistant en disque et garniture de frein

(43) Veröffentlichungstag der Anmeldung: 22.03.2000
(73) Patentinhaber: DaimlerChrysler AG, 70567 Stuttgart (DE)
(72) Erfinder: Rebstock, Kolja, 89073 Ulm (DE); Näumann, Emil, 73061 Ebersbach (DE); Dr. Tilman Haug, 89264 Weisenhorn (DE)

(56) Entgegenhaltungen:
- EP-A- 0 271 965
- EP-A- 0 360 254
- WO-A-96/10137
- WO-A-97/41368
- DE-A- 2 539 847
- US-A- 5 620 791

## Beschreibung

Die Erfindung betrifft eine Bremseinheit umfassend eine Bremsscheibe aus thermisch hoch belastbarem Material und einen mit ihr tribologisch zusammenarbeitenden Bremsbelag.

Gattungsgemäße Bremsscheiben sind z.B. aus den deutschen Patentanmeldungen DE 44 38 455 und DE 43 22 113 bekannt. Aus der DE 43 22 113 ist eine Bremsscheibe mit einem Metall-Tragkörper bekannt, auf dem Schichten eines thermisch hoch belastbaren Materials aufgebracht sind. Um zu vermeiden, dass durch übermäßige Erhitzung dieses Bereichs der Bremsbelag Schaden nimmt, ist zum einen eine Metallfüllung in der Keramik vorgesehen, die die Hitze auf den metallischen Tragkörper ableitet und zum einen die Ausführung der Bremsscheibe als innenbelüftete Bremsscheibe vorgesehen.

Dennoch muss der mit der Bremsscheibe tribologisch zusammenarbeitende Reibkörper bzw. Reibbelag thermisch stabil sein. Wegen der geringeren spezifischen Wärmekapazität und schlechteren Wärmeleitfähigkeit von Keramik im Vergleich zu hohen thermischen Graugussbremsscheiben kann es aufgrund der sich entwickelnden Reibungshitze zu einer erheblichen Wärmeentwicklung kommen. Die Bremsscheibe hält diesen Temperaturen wegen ihrer Stabilität mühelos stand. Ein konventioneller Bremsbelag würde jedoch zerfallen.

Wegen den im Kontaktbereich zum Bremsbelag auftretenden hohen Temperaturen sind technisch konventionelle Bremsbeläge mit organischem Bindesystem an sich nicht zur Verwendung mit derartigen Bremsscheiben geeignet. Der organische Binder zerfällt bei den beobachteten Temperaturen, so dass der Belag demzufolge sehr schnell verschleißt. Demzufolge wird versucht, neuartige Bremsbeläge zu entwickeln. Ein solcher Bremsbelag auf Sintermetallbasis ist aus der deutschen Anmeldung 197 11 830 bekannt. Dies ist jedoch sehr aufwendig.

In der EP 0 360 254 A2 wird eine Bremsanordnung beschrieben, die aus einer Graugußbremsscheibe und einem organisch gebundenen Bremsbelag besteht. Es wird ausgehend von der allgemein bekannten Wärmeleitfähigkeit von Grauguß die nötige Wärmeleitfähigkeit des Bremsbelages berechnet, die eine Überhitzung der Bremsanordnung verhindert. Ein Nachteil dieser Bremsanordung ist die für Hochleistungsfahrzeuge unbefriedigende thermische Beständigkeit und Verschleißbeständigkeit von Graugußbremsscheiben.

Aufgabe der Erfindung ist es daher, eine Bremseinheit bereitzustellen, bei der eine thermisch hochbelastbare Bremsscheibe, die gegenüber Grauguß eine deutlich erhöhte Verschleißbeständigkeit aufweist, mit einem geeigneten thermisch belastbaren Bremsbelag kombiniert ist, derart, dass auch konventionelle Bremsbeläge einsetzbar sind.

Diese Aufgabe wird erfindungsgemäß durch die den Patentanspruch 1 kennzeichnenden Merkmale gelöst.

Die Lösung besteht darin, dass eine im Wesentlichen aus einem kurzfaserverstärkten Keramikmaterial bestehende Bremsscheibe vorgesehen ist, deren Wärmeleitfähigkeit insbesondere quer zur Scheibenoberfläche mindestens 20 W/mK, vorzugsweise 30 bis 45 W/mK beträgt und dass die Bremsscheibe mit einem Bremsbelag mit organisch gebundener Matrix kombiniert ist.

Die erhöhte bzw. gleichmäßigere Wärmeleitfähigkeit ist auf die Verwendung kurzer Fasern zurückzuführen, die in jeder beliebigen Raumrichtung orientiert sein können.

Die Erfindung stellt eine optimale Paarung von Bremsscheibe und Bremsbelag unter den Bedingungen einer erhöhten thermischen Belastbarkeit auf Seiten der Bremsscheibe im Hinblick auf eine zumutbare Standzeit des Bremsbelags sowie auf sonstige tribologische Anforderungen wie Reibwerthöhe und/oder Temperaturabhängigkeit des Reibwertes dar.

Die Wärmeleitfähigkeit kann in jeder Richtung der Bremsscheibe eingestellt werden. Bevorzugt ist zunächst die Einstellung senkrecht zur Scheibenoberfläche. Damit ist besonders bei belüfteten Bremsscheiben gewährleistet, dass die sich entwickelnde Reibungshitze auf kürzestem Weg abgeführt wird.

Die Einstellung der Wärmeleitfähigkeit kann aber auch parallel zur Scheibenoberfläche erfolgen. Damit wird die Reibungshitze über die Scheibe verteilt und vermieden, dass sich im Kontaktbereich zum Bremsbelag ein ringförmiger Bereich besonders hohen Temperaturen bilden würde, der den Bremsbelag beschädigen könnte.

Die Wärmeleitfähigkeit ist so bemessen, dass die beobachteten Temperaturen selbst bei unbelüfteten Bremsscheiben nicht wesentlich höher als ca. 500° Celsius sind bzw. dass die Bremsflüssigkeit auf weniger als ca 200° Celsius erhitzt wird. Bevorzugt sind jedoch belüftete Bremsscheiben, die der Wärmeleitfähigkeit denen von Grauguss vergleichbar ist.

Dank der relativ hohen Wärmeleitfähigkeit der Bremsscheibe insbesondere quer zur Bremsfläche treten trotz hoher Beanspruchung der Bremse also im Kontaktbereich zum Bremsbelag Temperaturen von nicht wesentlich mehr als 500° Celsius auf. Diese Temperaturen können überraschenderweise selbt von kommerziellen Bremsbelägen mit organischen Bindern bei ohne weiteres vertretbaren Verschleißraten ausgehalten werden. Diese ansich bekannten Beläge werden üblicherweise bei Grauguß-Bremsscheiben eingesetzt, die zum einen eine höhere Wärmeleitfähigkeit als traditionelle Keramik haben und die zum anderen thermisch wesentlich geringer belastbar sind als Keramik. Dass der konventionelle Bremsbelag unter den völlig veränderten Randbedingungen dennoch erfolgsversprechend eingesetzt werden kann, war vom Fachmann nicht zu erwarten.

Es ist allerdings von Vorteil, wenn die Wärmeleitfähigkeit der Bremsscheibe zumindest angenähert isotrop eingestellt ist. Die richtungsabhängigen Unterschiede der Wärmeleitfähigkeit sollten vorzugsweise kleiner als 40 % bezogen auf den Höchstwert sein. Damit wird verhindert, dass sich lokale Temperaturspitzen entwickeln können, die den organisch gebundenen Reibbelag beschädigen und somit seine Standzeit verkürzen können.

Bei der Bremsscheibe handelt es sich vorzugsweise um eine kurzfaserverstärkte C/SiC-Keramikbremsscheibe. Dieses Material ist dem Fachmann wohl bekannt und z.B. in der deutschen Patentanmeldung 197 11 829.1 beschrieben. Auf diese Offenbarung wird Bezug genommen. Dieser Werkstoff ist extrem temperaturstabil und kann dennoch erfindungsgemäß mit einem Bremsbelag mit organisch gebundener Matrix kombiniert werden.

Besonders vorteilhaft ist es, wenn die Bremsscheibe aus kurzfaserverstärkte C/SiC-Keramik mit isotrop orientierten kurzen Fasern besteht. Bei einer besonders bevorzugten Ausführungsform der Bremsscheibe besteht diese aus einer kurzfaserverstärkten Verbundkeramik mit hochwarmfesten Fasern, die mit einer Matrix auf Siliziumbasis reaktionsgebunden sind, wobei in der Matrix Kurzfaserbündel statistisch verteilt eingebettet sind. Die Kurzfaserbündel bestehen aus gebündelten Einzelfaserfilamenten unter weitgehendem Erhalt der einzelnen Filamente. Sie sind zumindest in ihrem Randbereich von einer Beschichtung aus Kohlenstoff umgeben, der ganz oder teilweise mit dem Matrixwerkstoff reagiert hat.

Die Wärmeleitfähigkeit bzw. das isotrope Verhalten lassen sich über die Homogenität des Materials einstellen. Man strebt eine multidirektionale, statistische Anordnung der Kurzfaserbündel an, die Bereiche geringer Wärmeleitfähigkeit vor allem an Phasengrenzen überbrücken. Auf diese Weise werden Werte für die Wärmeleitfähigkeit erhalten, die mit denen von Grauguss vergleichbar sind. Je mehr Poren und/oder reines Silizium enthalten ist, desto geringer ist die Wärmeleitfähigkeit. Das Vorhandensein von luftgefüllten Poren verschlechtert an sich ebenfalls die Wärmeleitfähgikeit. Sind viele mit Silizium gefüllte Poren vorhanden, kann es zu Strukturanomalien und Rissbildung kommen.

Die Isotropie wird durch Verwendung kurzer Kohlenfaserbündel, wie sie in der Anmeldung 197 11 829 beschrieben sind, und durch homogenes Mischen der Ausgangssubstanzen erreicht. Die Faserbündel liegen in beliebiger Orientierung, also in isotroper Anordnung vor.

Vorzugsweise enthält eine Bremsscheibe ca. 35-45 Vol.-% Fasern, ca. 40-50 Vol-% Siliziumcarbid (aus konvertiertem Graphitmaterial des der Silizierung zu unterwerfenden C/C-Körpers) und max. ca. 15 Vol-% freies Silizium. Luftgefüllte Poren sollten nicht vorhanden sein.

In vorteilhafter Weise ist ferner vorgesehen, dass der Bremsbelag mit einer metallischen Rückenplatte versehen ist. Die Kombination eines organischen Bremsbelags mit hoher Wärmeleitfähgikeit mit einer keramischen Rückenplatte ist ebenfalls möglich und erhöht die Stabilität und Belastbarkeit der erfindungsgemäßen Bremseinheit. Die keramische Rückenplatte verhindert in diesem Fall die Ableitung der Temperatur vom Bremsbelag an den Bremskolben und damit an die Bremsflüssigkeit.

Der Bremsbelag kann Hartpartikel in einem Anteil bis zu etwa 35 % enthalten. Diese Hartpartikel können Keramik, insbesondere Metallcarbide sein. Die Hartstoffpartikel liegen vor der Verarbeitung vorzugsweise in Pulverform vor. Besonders bevorzugt sind Siliciumcarbid, Titancarbid, Borcarbid, Aluminiumoxid oder Glas. Vorteilhafter Weise können ferner Schmiermittel, insbesondere feste Schmiermittel wie Molybdänsulfid, Calciumfluorid oder Graphit zugegen sein.

Als organischer Binder könen auch prkeramische Polymere eingesetzt werden. z.B. Verbindungen aus den Gruppen der Vinylharze, Polysilane, Polysilazane, Polyborosilane, Polycarbosilane, Polyborocarbosilane oder Polyborocarbosilazane.

Im Folgenden wird ein Ausführungsbeispiel der vorliegenden Erfindung anhand der folgenden Figuren näher erläutert. Es zeigen:

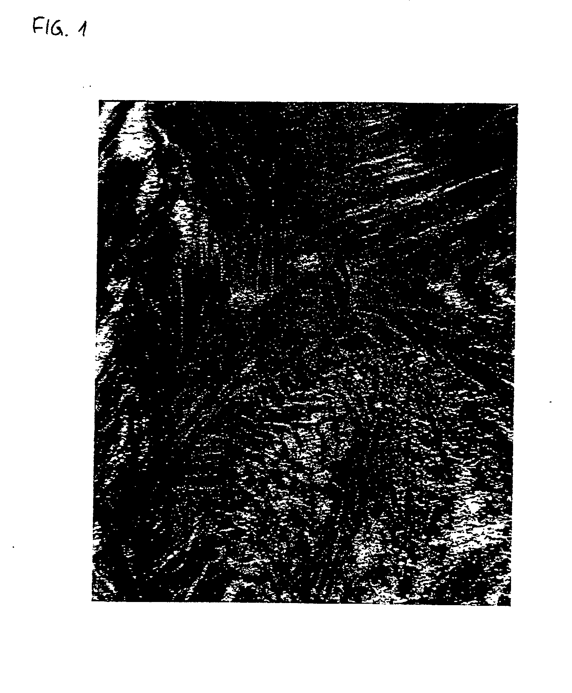

- Figur 1: ein lichtmikroskopisches Gefügebild einer erfindungsgemäßen Bremsscheibe bestehend aus einer C/SiC-Keramik.

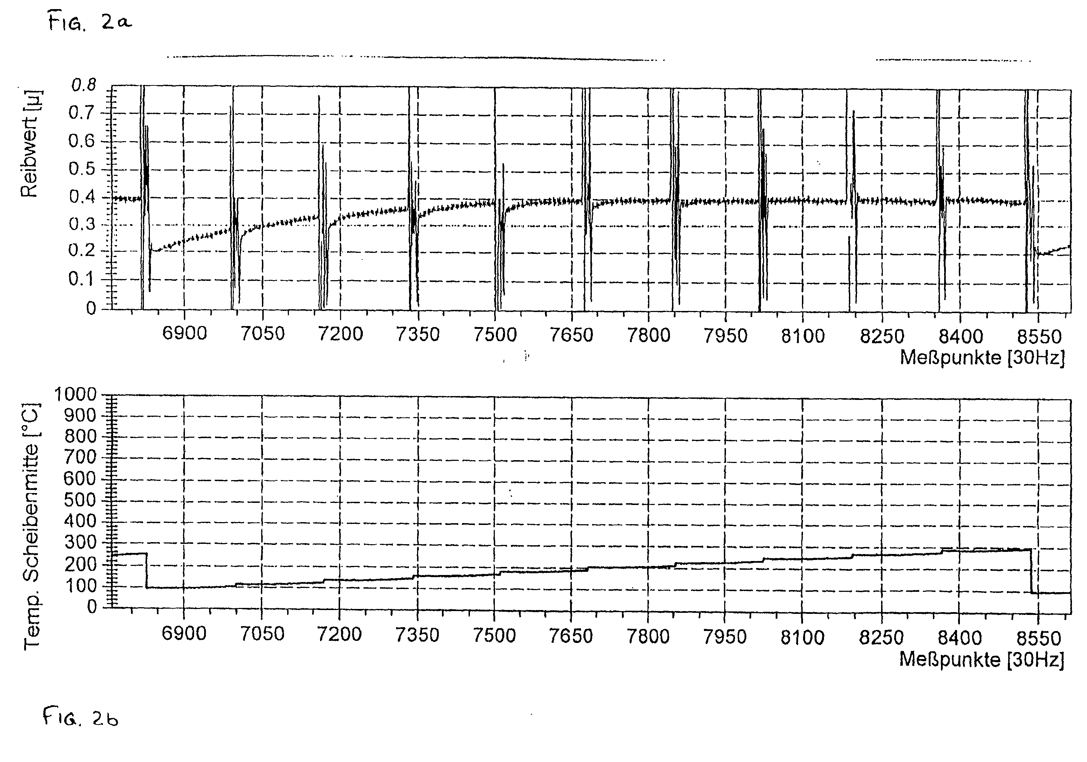

- Figuren 2a und 2b: ein Prüfstandsdiagramm mit dem Verlauf des Reibwertes (Figur 2a) und dem Temperaturverlauf (Figur 2b) in der Scheibenmitte, wobei eine Bremsscheibe gemäß Figur 1 und ein konventioneller organischer Reibbelag verwendet wurden.

Das Ausführungsbeispiel umfasst eine Bremsscheibe aus C/SiC-Keramik. Der Durchmesser beträgt 285 mm. Die Bremsscheibe besteht aus etwa 40 Vol.-% C-Fasern, 50 Vol.-% SiC und 10 Vol.-% Silizium. Die Schwankungsbreite der Wärmeleitfähigkeit in Axial-, Radial- und Umfangsrichtung betrug etwa 30-45 W/mK. Der getestete Bremsbelag war ein PKW-Serien-Bremsbelag mit einer Fläche von 86 x 60 mm mit folgender Zusammensetzung ca. 30-40 Gew.-% Metalle in Form von Stahlwolle und Kupferpulver in etwa gleichen Anteilen, 25-30 Gew.-% Füllstoffen, nämlich 1-1,5 Gew.-% Al₂O₃, 6-7 Gew.-% Glimmermehl, 9-10 Gew.-% Schwerspat und 9-11 Gew.-% Eisenoxid, 25-30 Gew.-% Gleitmittel, nämlich 5-7 Gew.-% SbS₃, 3-5 Gew.-% Graphit und 15-17 Gew.-% Kokspulver, sowie einem organischen Anteil von etwa 10-12 Gew.-%, nämlich 1-2 Gew.-% Aramidfaser, 3-5 Gew.-% Harzfüllstoffpulver und 5-6 Gew.-% Bindeharz. Die Zusammensetzung von Serienbelägen ist auch allgemein bekannt. Der Bremsbelag war auf eine metallische Rückenplatte montiert. Der Bremsversuch wurde an einem Bremsenprüfstand mit einem Bremsdruck von 10 bar und einer Geschwindigkeit von 60-200 km/h durchgeführt.

Der gemessene Reibbeiwert lag zwischen 0,2 und 0,4. Die Temperatur blieb unter 300°C, der gemessene Verschleiß bei einem Anpressdruck von 10 bar betrug 1-1,5 g.

## Patentansprüche

1. Bremseinheit umfassend eine Bremsscheibe aus thermisch hochbelastbarem Material und einen mit ihr tribologisch zusammenarbeitenden, organisch gebundenen Bremsbelag, **dadurch gekennzeichnet, dass**
eine Bremsscheibe vorgesehen ist, die aus einem kurzfaserverstärkten C/SiC-Verbundwerkstoff besteht, der im Wesentlichen isotrop angeordnete Fasern oder Faserbündel enthält, und die Wärmeleitfähigkeit der Bremsscheibe zwischen 20 W/mK und 45 W/mK beträgt

2. Bremseinheit nach Anspruch 1, **dadurch gekennzeichnet, dass** die Wärmeleitfähigkeit der Bremsscheibe zumindest angenähert isotrop ist.

3. Bremseinheit nach Anspruch 2, **dadurch gekennzeichnet, dass** die richtungsabhängigen Unterschiede der Wärmeleitfähigkeit kleiner als 40 % bezogen auf den Höchstwert sind.

4. Bremseinheit nach Anspruch 1 bis 3, **dadurch gekennzeichnet, dass** der Verbundwerkstoff im Wesentlichen porenfrei ist.

5. Bremseinheit nach einem der Ansprüche 1 bis 4, **dadurch gekennzeichnet, dass** die Bremsscheibe aus ca. 35-45 Vol.-% Kohlenstofffasern, ca. 40-50 Vol.-% Siliziumcarbid und max. ca. 15% freiem Silizium besteht.

6. Bremseinheit nach einem der vorhergehenden Ansprüche, **dadurch gekennzeichnet, dass** der Bremsbelag ein herkömmlicher organisch gebundener Serienbelag ist.

7. Bremseinheit nach einem vorhergehenden Ansprüche, **dadurch gekennzeichnet, dass** der Bremsbelag Hartpartikel bis zu einem Anteil bis etwa 35 % enthält.

8. Bremseinheit nach Anspruch 7, **dadurch gekennzeichnet, dass** die Hartpartikel aus Keramik, wie Siliziumcarbid, Titancarbid oder Borcarbid bestehen.

9. Bremseinheit nach einem der Ansprüche 7 oder 8, **dadurch gekennzeichnet, dass** die Hartpartikel aus Aluminiumoxid oder Glas bestehen.

10. Bremseinheit nach einem der vorhergehenden Ansprüche, **dadurch gekennzeichnet, dass** der Bremsbelag Schmiermittel wie Molybdänsulfid, Calciumfluorid oder Grafit enthält.

11. Bremseinheit nach einem der vorhergehenden Ansprüche, **dadurch gekennzeichnet, dass** der Bremsbelag als Bindemittel präkeramische Polymere aus den Gruppen der Vinylharze, Polysilane, Polyborosilane, Polycarbosilane, Polyborosilazane, Polyborocarbosilane, Polyborocarbosilazane oder Polysilazane aufweist.

12. Bremseinheit nach einem der vorhergehenden Ansprüche, **dadurch gekennzeichnet, dass** der Bremsbelag mit einer metallischen Rückenplatte versehen ist.

13. Bremseinheit nach einem der vorhergehenden Ansprüche, **dadurch gekennzeichnet, dass** der Bremsbelag eine hohe Wärmeleitfähigkeit aufweist und mit einer keramischen Rückenplatte versehen ist.

## Claims

1. Brake unit comprising a brake disc made of a material that can withstand thermal stress and an organically bonded brake lining which cooperates tribologically therewith,
**characterised in that**
a brake disc is provided, which consists of a short-fibre-reinforced C/SiC composite material containing fibres or fibre bundles arranged substantially isotropically, and the thermal conductivity of the brake disc is between 20 W/mK and 45 W/mK.

2. Brake unit according to Claim 1,
**characterised in that**
the thermal conductivity of the brake disc is at least approximately isotropic.

3. Brake unit according to Claim 2,
**characterised in that**
the direction-dependent variation of the thermal conductivity is less than 40% relative to the maximum value.

4. Brake unit according to Claims 1 to 3,
**characterised in that**
the composite material is substantially free from pores.

5. Brake unit according to any of Claims 1 to 4,
**characterised in that**
the brake disc consists of approximately 35 - 45 vol.-% of carbon fibres, approximately 40 - 50 vol.-% of silicon carbide and a maximum of application 15% of free silicon.

6. Brake unit according to any of the preceding claims,
**characterised in that**
the brake lining is a conventional, mass-produced organically bonded lining.

7. Brake unit according to any of the preceding claims,
**characterised in that**
the brake lining contains hard particles in a proportion of up to 35%.

8. Brake unit according to Claim 7,
**characterised in that**
the hard particles consist of a ceramic such as silicon carbide, titanium carbide or boron carbide.

9. Brake unit according to either of Claims 7 or 8,
**characterised in that**
the hard particles consist of aluminium oxide or glass.

10. Brake unit according to any of the preceding claims,
**characterised in that**
the brake lining contains lubricants such as molybdenum sulphide, calcium fluoride or graphite.

11. Brake unit according to any of the preceding claims,
**characterised in that**
as the binder, the brake lining comprises pre-ceramic polymers from the group consisting of vinyl resins, polysilanes, polyborosilanes, polycarbosilanes, polyborosilazanes, polyborocarbosilanes, polyborocarbosilazanes or polysilazanes.

12. Brake unit according to any of the preceding claims,
**characterised in that**
the brake lining is provided with a metallic backing plate.

13. Brake unit according to any of the preceding claims,
**characterised in that**
the brake lining has a high thermal conductivity and is provided with a ceramic backing plate.

## Revendications

1. Unité de frein comprenant un disque de freinage en un matériau pouvant être fortement chargé thermiquement et une garniture de frein liée de manière organique, en coopération tribologique, avec celui-ci, **caractérisée en ce qu'**un disque de freinage est prévu,qui consiste en un matériau composite C/SiC renforcé par des fibres courtes, qui contient des fibres ou faisceaux de fibres disposées de manière essentiellement isotrope et **en ce que** la conductibilité thermique du disque de freinage se situe dans l'intervalle allant de 20 W/mK à 45W/mK.

2. Unité de frein selon la revendication 1, **caractérisée en ce que** la conductibilité thermique du disque de freinage est au moins approximativement isotrope.

3. Unité de frein selon la revendication 2, **caractérisée en ce que** les différences directionnelles de la conductibilité thermique sont inférieures à 40% par rapport à la valeur la plus élevée.

4. Unité de frein selon la revendication 1 ou 3, **caractérisée en ce que** le matériau composite est essentiellement non poreux.

5. Unité de frein selon l'une quelconque des revendications 1 à 4 **caractérisée en ce que** le disque de freinage consiste en environ 35-45% en volume de fibres de carbone, environ 40-50% en volume de carbure de silicium et au maximum, environ 15% de silicium libre.

6. Unité de frein selon l'une quelconque des revendications précédentes, **caractérisée en ce que** la garniture de frein est une garniture en série liée de manière organique, usuelle.

7. Unité de frein selon l'une quelconque des revendications précédentes, **caractérisée en ce que** la garniture de frein contient des particules dures en une proportion de jusqu'à environ 35%.

8. Unité de frein selon la revendication 7 **caractérisée en ce que** les particules dures consistent en de la céramique, comme du carbure de silicium, du carbure de titane ou du carbure de bore.

9. Unité de frein selon l'une quelconque des revendications 7 ou 8 **caractérisée en ce que** les particules dures consistent en de l'oxyde d'aluminium ou du verre.

10. Unité de frein selon l'une quelconque des revendication précédentes, **caractérisée en ce que** la garniture de frein contient un lubrifiant comme le sulfure de molybdène, le fluorure de calcium ou le graffite.

11. Unité de frein selon l'une quelconque des revendication précédentes, **caractérisée en ce que** la garniture de frein présente comme liant, un polymère précéramique choisi parmi le groupe des résines vinyliques, polysilanes, polyborosilanes, polycarbosilanes, polyborosilazanes, polyborocarbosilanes, polyborocarbosilazanes ou polysilazanes.

12. Unité de frein selon l'une quelconque des revendication précédentes, **caractérisée en ce que** la garniture de frein est munie d'une plaque arrière métallique.

13. Unité de frein selon l'une quelconque des revendications précédentes, **caractérisée en ce que** la garniture de frein présente une conductibilité thermique élevée et est munie d'une plaque arrière céramique.
